(19) Europäisches Patentamt
European Patent Office
Office européen des brevets

(11) Publication number: **0 096 535**
**B1**

# (12) EUROPEAN PATENT SPECIFICATION

(45) Date of publication of patent specification: **05.11.86**

(21) Application number: **83303159.4**

(22) Date of filing: **01.06.83**

(51) Int. Cl.[4]: **C 07 F 9/22**, C 07 F 9/24, C 07 F 9/44, A 01 N 57/32, A 01 N 57/30, A 01 N 57/28

## (54) Phosphorus derivatives of carbamimidothioic esters.

(30) Priority: **04.06.82 US 385153**

(43) Date of publication of application: **21.12.83 Bulletin 83/51**

(45) Publication of the grant of the patent: **05.11.86 Bulletin 86/45**

(84) Designated Contracting States: **AT BE CH DE FR IT LI LU NL SE**

(56) References cited:
**JOURNAL OF AGRICULTURAL AND FOOD CHEMISTRY, vol. 30, no. 6, November/December 1982, pages 1068-1070, American Chemical Society, Washington, D.C., USA J.B. PIERCE et al.: "Syntheses and herbicidal activity of (Dialkylamino)alkoxymethylene)phosporamidic esters"**

**The file contains technical information submitted after the application was filed and not included in this specification**

(73) Proprietor: **THE DOW CHEMICAL COMPANY
2030 Dow Center Abbott Road P.O. Box 1967
Midland, MI 48640 (US)**

(72) Inventor: **Reifschneider, Walter
3538 Bayberry Drive
Walnut Creek California (US)**
Inventor: **Paroonagian, Doris Lucy
1731 Shirley Drive
Pleasant Hill California (US)**

(74) Representative: **Allard, Susan Joyce et al
BOULT, WADE & TENNANT 27 Furnival Street
London EC4A 1PQ (GB)**

(56) References cited:
**CHEMICAL ABSTRACTS, vol. 66, no. 17, 24th April 1967, page 7081, no. 75644j, Columbus, Ohio, USA L.N. LEVKOVA et al.: "On the synthesis of N-phosphoryliminothiocarbamic acid and N-phosphorylimidocarbamide derivatives"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 096 535 B1

Courier Press, Leamington Spa, England.

(56) References cited:

CENTRAL PATENTS INDEX BASIC ABSTRACTS JOURNAL, Section C, AGDOC, week E42, 15th December 1982, Abstract no. 89776, London, GB. N.N. MELNIKOV: "Phosphorylated tri:methyl-isothiourea derivs. in ag. acetone-used in form of ag. acetone soln. as agriculture insecticides and acaricides"

CHEMICAL ABSTRACTS, vol. 90, no. 7, 12th February 1979, page 570, no. 54501r, Columbus, Ohio, USA

CHEMICAL ABSTRACTS, vol. 95, no. 15, 12th October 1981, page 633, no. 132447x, Columbus, Ohio, USA L. KURUC et al.: "Phosphorylated isothioureas. V. Preparation and properties of 3-phosphorylated and 3-thiphosphorylated 1,1,2-trisubstituted isothioureas"

JOURNAL GENERAL CHEMISTRY USSR, vol. 48, no. 8, August 1978, pages 1579-1583, Plenum Publishing Corporation, New York, USA L.YA. BOGEL'FER et al.: "Phosphorylated amidine systems. Synthesis and study of the stereoisomerism of phosphorylated isothioureas by means of PMR spectroscopy"

Chemical Abstracts, Volume 62 Abstract No. 3921f 1965

**Description**

Various phosphorus derivatives of carbamimidothioic acid esters are known such as those taught in Czechoslovakian Patent No. 172,676.

SU—A—707232 discloses compounds having insecticidal and acaricidal activity which are phosphorylated derivatives of trimethylisothiourea. Chem. Zvesti 35(3) Pages 373—387 (1981) discloses certain phosphoryl and thiophosphoryl substituted thioureas and isothioureas, such as 3-(O,O-dimethylphosphoryl)-1,1-diethyl-2-butyl-isothiourea and 3-(O,O-dimethylphosphoryl)-1,1-dimethyl-2-methyl-isothiourea.

Chemical Abstracts, Volume 62, Abstract No. 3921, f, 1965 discloses derivatives of methyleneamide of diethyl phosphate such as 3-(O,O,diethylphosphoryl)-1,1-dimethyl-2-propyl- or butyl-isothiourea. Chemical Abstracts, Volume 66, Abstract No. 75644 j, 1967 discloses the compound 3-(O,O-diethylphosphoryl)-1,1-diethyl-2-propyl-isothiourea.

The present invention is directed to compounds corresponding to the formulae:—

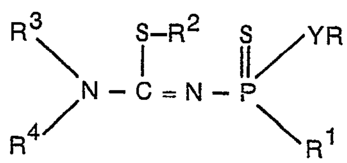

wherein

R is an alkyl group containing 1 to 4 carbon atoms;

$R^1$ is an alkyl group containing 1 to 4 carbon atoms or an alkoxy group containing 1 to 4 carbon atoms;

$R^2$ is an alkyl group containing 1 to 4 carbon atoms;

$R^3$ is an alkyl group containing 1 to 4 carbon atoms, a phenyl, substituted phenyl, benzyl or substituted benzyl group;

$R^4$ is an alkyl group containing 1 to 4 carbon atoms, a benzyl or substituted benzyl group; or

$R^3$ or $R^4$ taken together represent an alkylene group containing 4 to 6 carbon atoms which group can be straight or branched chain or a group of the formulae

$$-[CH_2CH_2]-O_2$$

and

Y is oxygen or sulfur with the proviso that when $R^1$ is alkoxy then Y is sulphur.

By the terms "alkyl" and "alkoxy" as used herein are meant alkyl or alkoxy groups in which the alkyl group is either straight chain or branched chain. Such groups are, for example, methyl, ethyl, n-propyl, isopropyl, n-butyl, isobutyl or tertiary butyl.

By the terms "substituted phenyl" and "substituted benzyl" as used herein are meant phenyl and benzyl groups containing independently from 1 to 5 chloro, bromo, fluoro, iodo or alkyl groups of 1 to 4 carbon atoms, with the proviso that all substituent groups must be sterically compatible with each other.

By the term "sterically compatible" as used herein is meant substituent groups which are affected by steric hindrance as defined in "The Condensed Chemical Dictionary", 7th edition, Reinhold Publishing Co. N.Y., page 893 (1966) which definition is as follows: "steric hindrance. A characteristic of molecular structure in which the molecules have a spatial arrangement of their atoms such that a given reaction with another molecule is prevented or retarded in rate".

The preferred compounds of the present invention are those wherein YR is alkoxy, for example methoxy and $R^2$, $R^3$ and $R^4$ are alkyl. More preferred compounds are those wherein R is methyl or ethyl, for example, YR is methoxy, methylthio or ethylthio and $R^1$ is methyl, or YR is isopropylthio and $R^1$ is methoxy, $R^2$ is methyl, ethyl or isopropyl and $R^3$ and $R^4$ are each methyl. Even more preferred compounds are those wherein YR is methylthio, $R^1$ is methoxy, $R^2$ is methyl or ethyl and $R^3$ and $R^4$ are each methyl.

The compounds of the present invention are either oils or crystalline solids and are soluble in many common organic solvents.

In addition, the compounds of the present invention find utility as plant systemic insecticides and acaricides which are highly effective in the kill and control of aphids, scales, phytophagous mites and sucking insects.

The compounds of the present invention can be prepared by a variety of methods as follows.

Method A:

Compounds having the following combinations of YR and $R^1$ can be prepared employing this method:

| YR | |
|---|---|
| OR | R |
| SR | R |
| SR | OR |

Substantially equimolar amounts of an appropriate substituted carbamimidothioic acid ester of the formula

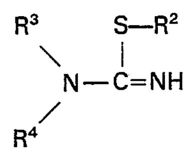

and an appropriate phosphorus chloride of the formula

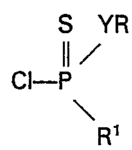

are reacted together in the presence of a solvent and a HCl acceptor.

In carrying out the reaction, the substituted carbamimidothioic acid ester and the phosphorus chloride reactants the solvent and the HCl acceptor are mixed together in any convenient manner. The mixture is then stirred at a temperature between 156°C and gentle reflux until all of the phosphorus reactant is consumed.

Representative solvents include, for example, acetonitrile, cyclohexane, benzene, toluene, xylene, acetone, methylene chloride, methylethyl ketone, dimethylether, dioxane and tetrahydrofuran.

Representative hydrogen chloride absorbers (acid-binding agents) include for example, alkali metal carbonates such as sodium and potassium carbonate and tertiary amines such as, for example, trimethylamine, triethylamine and pyridine.

At the completion of the reaction, the reaction mixture is filtered to remove any insolubles and the filtrate concentrated under reduced pressure. The residue is then taken up in ethyl ether, benzene, toluene, methylene chloride or chloroform and washed thoroughly with water and then with a saturated sodium chloride solution and dried. The solvent is removed by evaporation under reduced pressure leaving the desired product.

Method B:

Compounds having the following combinations of YR and $R^1$ can be prepared employing this method:

| YR | $R^1$ |
|---|---|
| SR | OR |

Substantially equimolar amounts of an appropriate N'(chloromethoxyphosphinyl)-N,N-substituted carbamimidothioic acid ester of the formula

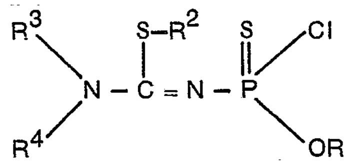

and a compound corresponding to the formula

HSR

are reacted together in the presence of a solvent and a HCl acceptor.

The reaction is conducted in a manner substantially the same as the reaction of Method A employing a temperature in the range of minus (−) 5°C to plus (+) 80°C. The solvents, the HCl acceptors and the method of recovery are the same as set forth in Method A.

Example I

Methyl N-(methoxy(methylthio)phosphinothioyl)-4-morpholinecarboximidothioate

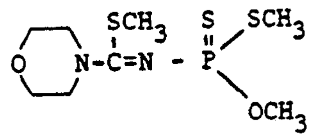

The oil from 0.9 g of 50% sodium hydride was removed by washing with hexane and the washed material was then added to 100 ml of tetrahydrofuran. This mixture was cooled to 5°C and 3 g of methanethiol was added dropwise. The mixture was allowed to warm to room temperature and then a solution of 5 g of methyl N-(chloromethoxyphosphinothioyl)-4-morpholinecarboximidothioate in 35 ml of tetrahydrofuran was added dropwise. The mixture was stirred at room temperature for one hour and was heated to 40°C for one hour. The reaction mixture was filtered and the filtrate concentrated under reduced pressure. The residue was dissolved in ether and the ether solution washed twice with 40 ml portions of water, once with a saturated sodium chloride solution and dried over anhydrous magnesium sulfate. The solvent was removed in a rotary evaporator, leaving 4.7 g of oil. The NMR spectra indicated that methyl N-(methoxy(methylthio)phosphinothioyl)-4-morpholinecarboximidothioate was the product and that it contained a small amount of impurity. The impurity was removed by heating the product to 55°C at a pressure of 0.05 mm in a Kugelrohr. A yellow oil, RI(25°) = 1.6199, was obtained. The IR and NMR spectra were in agreement with the desired structure.

Analysis:

| | |
|---|---|
| Calcd. for $C_8H_{17}N_2O_2PS_3$ | C, 31.99; H, 5.71; N, 9.33. |
| Found: | C, 32.63; H, 5.68; N, 9.61. |

(Compound 1)

Example II

Methyl N'-(methoxy(methyl)phosphinothioyl)-N,N-dimethylcarbamimidothioate

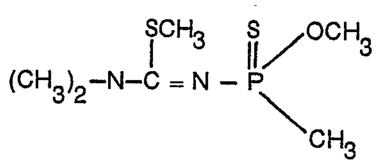

A mixture of 5.9 g of methyl N,N-dimethylcarbamimidothioate, 50 ml of acetonitrile, 7.2 g of 0-methyl methyl phosphonochloridothioate, and 7.5 g of finely powdered potassium carbonate was stirred without heating for 2 hours. At this time no more starting phosphorus chloride could be detected by GLC. The insoluble salts were removed by filtration and the filtrate concentrated under vacuum. The residual oil was taken up in ether, the ether solution washed twice with water then once with a saturated sodium chloride solution and dried over anhydrous sodium sulfate. The ether was removed in a rotary evaporator leaving a pale reddish oil. GLC indicated the product was contaminated with starting methyl N,N-dimethylcarbamimidothioate. The mixture was placed in a Kugelrohr and heated to 75—80°C under a 0.1 mm vacuum. The oil which remained (8.9 g) was further purified by high pressure liquid chromatography using a mixture of 30% acetone in hexane. The methyl N'-(methoxy(methyl)phosphinothioyl)-N,N-dimethylcarbamimidothioate product was recovered in a yield of 5.8 g as a colorless oil and had a refractive index of $n_d^{25}$ = 1.4795. GLC analysis showed material was 94% pure, with starting material being the contaminant. NMR and IR spectra were in agreement with the desired structure.

Analysis:

| | |
|---|---|
| Calcd. for $C_6H_{15}N_2OPS_2$: | C, 31.84; H, 6.68; N, 12.38. |
| Found: | C, 30.60; H, 6.76; N, 11.08. |

(Compound 2)

Example III

Ethyl N'-(ethylthio(methoxy)phosphinothioyl)-N,N-dimethylcarbamimidothioate

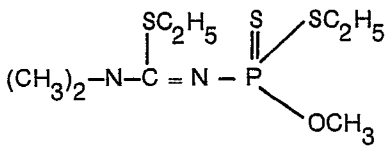

To a solution of 7.5 g of ethyl N'-(chloro(ethylthio)phosphonothioyl)-N,N-dimethylcarbamimidothioate in 100 ml of methylene chloride was added 20 ml of methanol and then dropwise 30 g of triethylamine. The mixture was stirred at room temperature overnight. The triethylamine hydochloride by product which formed was removed by filtration. The filtrate was washed four times with water, once with 5% aqueous sodium hydroxide, once with a saturated sodium chloride solution and dried over anhydrous sodium sulfate. The solvent was removed in a rotary evaporator leaving the ethyl N'-(ethylthio(methoxy)phosphinothioyl)-N,N-dimethyl(carbamimidothioate product leaving a pale amber colored oil. The product had a refractive index of $n_d^{25}$ = 1.5879. The IR and NMR spectra were in agreement with the structural assignment. (Compound 3).

By following the preparative procedures as outlined in the above methods of preparation and the above example and employing the appropriate starting materials, the following compounds set forth in Table I are prepared.

TABLE I

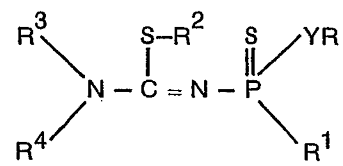

| Compound No. | $R^2$ | 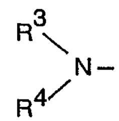 | X | YR | $R^1$ | Physical Property<br>Refractive Index or Melting Point °C |
|---|---|---|---|---|---|---|
| 4 | $-CH_3$ | $(CH_3)_2N-$ | S | $-SC_3H_7$ | $-OC_2H_5$ | $n\frac{25}{d} = 1.5736$ |
| 5 | $-CH_3$ | $(CH_3)_2N-$ | S | $-SCH_3$ | $-OCH_3$ | $n\frac{25}{d} = 1.6162$ |
| 6 | $-CH_3$ | 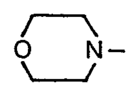 | S | $-SC_2H_5$ | $-OC_2H_5$ | $n\frac{25}{d} = 1.5670$ |
| 7 | $-C_2H_5$ | 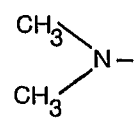 | S | $-SCH_3$ | $-OCH_3$ | $n\frac{25}{d} = 1.6016$ |
| 8 | $-CH(CH_3)_2$ | 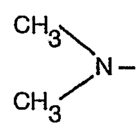 | S | $-SCH(CH_3)_2$ | $-OCH_3$ | $n\frac{25}{d} = 1.5619$ |

The compounds of the present invention are very effective for the control of the many insect pests found on the roots or aerial portions of growing plants, including sucking insects such as aphids, scales, and phytophagous mites.

These compounds are also effectively employed against rice insect pests, such as, for example, rice stem borers, rice green leafhoppers and rice brown planthoppers.

Moreover, the compounds effectively kill or inhibit the reproduction of plant pathogenic fungi, and therefore they are applicable to the control of plant diseases caused by various kinds of fungus. These esters can be employed as fungicides against plant diseases including those caused by Phycomycetes and Ascomycetes. These esters are particularly useful against plant pathogenic fungi of rice, fruit trees and vegetables.

Representative of the various insect pest which are killed and controlled by the active compounds of the present invention are members of the orders Homoptera, Thysanoptera, Hemiptera, Coleoptera, Lepidoptera, Orthoptera and Acarina. More specifically, kill and control is obtained for insects such as aphids (*Aphididae*) such as the green peach aphid (*Myzus persicae*), the bean aphid (*Aphis fabae*), the black cherry aphid (*Myzus ceraci*), the pea aphid (*Acythorsiphum pisum*) and the potato aphid (*Macrosiphum euphorbiae*), the currant gall aphid (*Cryptomyzus ribis*), the mealy apple aphid (*Sappaphis mali*), the mealy plum aphid (*Hyalopterus pruni*), the cotton aphid (*Aphis gossypii*), and the whiteflies (*Aleyrodidae*) including the banded wing whitefly (*Trialeurodes abutilonea*), grape whitefly (*Trialeurodes vittata*), greenhouse whitefly (*Trialeurodes vaporarium*) and sweet potato whitefly (*Bemisia tabacii*); in addition, scales such as the San Jose scale (*Aspidiotus perniciosus*), oyster scale (*Lepidosaphes ulnii*), the California red scale (*Aonidiella aurantii*), black scale (*Saissetia olea*), Terapin scale (*Lecanium* sp) and the oleander scale (*Aspidiotus hederae*); mealybugs (coccidae) such as the grape mealybug (*Pseudococcus maritimus*), greenhouse mealybug (*Pseudococcus* sp) and citrus mealybug (*Planococcus* sp); thrips (*Thysanoptera*) such as (*Hercinothrips femoralis*), gladiolus thrips (*Taeniothrips* sp), onion thrips (*Thrips tabacii*), greenhouse thrips (*Heliothrips* sp), flower thrips (*Frankliniella* sp) and rice thrips (*Chloethrips oryzae*), and bugs, for example the beet bug (*Piesma quadrata*), squash bug (*Anasa* sp), harlequin bugs (*Murgantia histriconica*), (*Trigonotylus* sp), Corbett ricebug (*Leptocorixa corbetti)*, slender ricebug (*Cletus trigonus*), black ricebug (*Scotinophora lurida*), plant bugs (*Lygus* sp), fleahoppers (*Halticus* sp), cotton fleahoppers (*Psallus* sp), the cotton bug (*Dysdercus intermedius*) and stinkbugs such as the southern green stinkbug (*Nezara viridulla*) and leafhoppers and planthoppers, such as aster leafhopper (*Macrosteles fascifrons*), rice green leafhopper (*Nephotettix virescens*), zig-zag leafhopper (*Recilia dorsalis*), (*Nephotettix apicalis*), white-back planthopper (*Sogattella furcifera*), smaller brown planthopper (*Laodelphax striatellus*), grape leafhopper (*Erythroneura* sp), potato leafhopper (*Empoasca fabae*), apple sucker (*Psylla mali*), pear psylla (*Psylla pyricola*), potato psillid (*Paratrioza cockerlelli*) and brown planthopper (*Nilaparvata lugens*), Borers (*Lepidoptera*) such as rice stemborer (*Chilo* sp), pink borer (*Sesamia* sp) and paddy borer (*Tryporyza* sp) and the like as well as Western spotted cucumber beetle (*Diabrotica undecimpunctata*) and rice water weevil (*Lissorhoptrus oryzophilus*) and the mites (*Acarina*) in particular, the spider mites (*Tetranychidae*) such as the two-spotted spider mite (*Tetranychus urticae*), carmine spider mite (*Tetranychus cinnabarinus*) and the European red mite (*Panonychus ulmi*), blister mites, for example the currant blister mite (*Eriophyes ribis*) and tarsonemids, for example the broad mite (*Hemitarsonemus latus*), the cyclamen mite (*Tarsonemus pallidus*); and the like.

In the present specification and claims, the term "systemic" defines the translocation of the active compound employed in the present method through the plant. The active compound can be applied either to the above-ground or preferably to below-ground portions of the plant.

The application of an insecticidally effective or fungicidally effective amount of an active compound of the present invention is critical to the method of the present invention. The active compound can sometimes be employed in unmodified form. Frequently, however, for easier application, the compound is modified by the employment with it of an adjuvant or inert carrier therefor. Thus, for example, many of the present compounds are very soluble in water and they are also relatively soluble in oils, including plant essential oils. Therefore, the practical enjoyment of the beneficial utilities of the present compound often requires that the compound be composited with one or more pesticidal adjuvant substances, and the resulting compositions are comprehended within the present invention.

The compositions can be formulated in various forms, such as emulsifiable concentrates, wettable powders, flowable suspension dusts, granules, microencapsulated granules, fine granules, oil sprays, aerosols, and the adjuvant employed can be any one or a plurality of materials including aromatic solvents, petroleum distillates, water, or other liquid carriers, propellant substances, surface-active dispersing agents, light absorbers, and finely divided carrier solids. In such compositions, the adjuvant cooperates with the active compound so as to obtain a composition to facilitate the method of the present invention, and to obtain an improved result. The use of either a surface-active dispersing agent or a finely divided carrier solid and the use of both a surface-active dispersing agent and a finely divided carrier solid, simultaneously, constitute preferred embodiments of the method of the present invention. Another preferred embodiment of the present invention is a composition comprising one or more of the presently claimed compounds, an organic liquid as a solvent and carrier therefor, and a propellant material. Numerous other embodiments will become available to those skilled in the art in view of the teachings set forth hereinbelow.

The exact concentration of the active compound in a composition thereof with an adjuvant therefor can vary; it is only necessary that the active compounds be present in a sufficient amount so as to make possible the application of an insecticidally effective dosage. Generally, for practical applications, the active compounds can be broadly applied to the plants or to the soil around the roots of the plants or to water, such as in broadcast rice paddy applications in compositions containing from 0.00001 percent to 98 percent by weight of the active compound.

In preparation of dust compositions, the product can be compounded with any of the finely divided carrier solids such as prophyllite, diatomaceous earth, gypsum and the like. In such operations, the finely divided carrier is ground or mixed with the active compound, as active agent, or wetted with a solution of the active agent in a volatile organic solvent. Similarly, dust compositions containing the active product can be similarly compounded from various of the solid dispersing agents, such as fuller's earth, attapulgite and other clays. These dust compositions can be employed as treating compositions or can be employed as concentrates and subsequently diluted with additional solid dispersing agent or with pyrophyllite, diatomaceous earth, gypsum and the like to obtain the desired amount of active agent in a treating composition. Also, such dust compositions can be dispersed in water, with or without the aid of surfactant, to form spray mixtures.

Further, the active compound or a dust concentrate composition containing said compound can be incorporated in intimate mixture with surface active dispersing agents such as ionic and nonionic emulsifying agents to form spray concentrates. Such concentrates are readily dispersible in liquid carriers to form sprays containing the toxicant in any desired amount. The choice of dispersing agent and amount thereof employed are determined by the ability of the agent to facilitate the dispersion of the concentrate in the liquid carrier to produce the desired spray composition.

In the preparation of liquid compositions, the active compound can be compounded with a suitable water-immiscible organic liquid and a surface-active dispersing agent to produce an emulsifiable liquid concentrate which can be further diluted with water and oil to form spray mixtures in the form of oil-in-water emulsions. In such compositions, the carrier comprises an aqueous emulsion, that is, a mixture of water-immiscible solvent, emulsifying agent and water. Preferred dispersing agents to be employed in these compositions are oil-soluble and include the nonionic emulsifiers such as the polyoxyethylene derivatives of sorbitan esters, complex ether alcohols and the like. However, oil-soluble ionic emulsifying agents such as mahogany soaps can also be used. Suitable organic liquids to be employed in the compositions include petroleum oils and distillates, toluene liquid halohydrocarbons and synthetic organic oils. The surface-active dispersing agents are usually employed in liquid compositions in the amount of from 0.1 to 20 percent by weight of the combined weight of the dispersing agent and active compound.

When operating in accordance with the present invention, the active compound or a composition containing the active compound is applied to the plants or to their habitat in any convenient manner, for example, by means of hand dusters or sprayers. Application to the foliage of plants is conveniently carried out with power dusters, boom sprayers and fog sprayers. In such foliar applications, the employed compositions should not contain any appreciable amounts of any phytotoxic diluents. In large scale operations, dusts, or low-volume sprays can be applied from an airplane.

In further embodiments, one of the compounds of the present invention or compositions containing the same, can be advantageously employed in combination with one or more additional pesticidal compounds. Such additional pesticidal compounds may be insecticides, nematocides, arthropodicides, herbicides, fungicides or bactericides that are compatible with the compounds of the present invention in the medium selected for application and not antagonistic to the activity of the present compounds. Accordingly, in such embodiments, the pesticidal compound is employed as a supplemental toxicant for the same or for a different pesticidal use, or as an additament. The compounds in combination can generally be present in the ratio of from 1 to 99 parts of the compound of the present invention with from 99 to 1 part of the additional compound(s).

Dosage amounts are generally from 15—1,000 grams (g) preferably from 40—600 g of active compound and most preferably from 125—500 g of active compound per hectare. However, in special cases, it is possible to exceed or reduce the amount and this may sometimes be necessary.

## Example IV

Seventy-five grams of air-dried soil were placed in a small container. To the soil was added sufficient volume of a 400 ppm dispersion, prepared by admixing a predetermined amount of one of the hereinafter set forth compounds, dissolved in a suitable inert solvent, with a predetermined amount of water and a predetermined amount of surfactant, to give various predetermined concentrations of the toxicant in the soil on a soil-chemical basis. The treated soil was air-dried and thoroughly mixed. To each treated container, and control containers treated with water and surfactant alone, was added 0.5 milliliters of an aqueous suspension of the eggs of the Western spotted cucumber beetle (WSCB) (70—80 eggs of 3—4 days old). Additional treated soil was used to cover the eggs and a corn seed was placed in the soil and covered with additional treated soil. The containers were thereafter maintained under conditions conducive to the growth of the seeds and the hatching of the eggs. Ten to twelve (10—12) days after treatment, the containers and the plants therein were examined to determine the minimum concentration

in parts of active compound per million parts of the ultimate dispersion necessary to give at least a 100 percent kill and control of the larvae from the hatched eggs. The results of this examination are set forth below in Table II.

TABLE II

| Number of active Compound | Minimum Concentration in ppm of active compound in soil to give a $LC_{100}$ of WSCB Larvae |
|---|---|
| 1 | >37.5 |
| 2 | >37.5 |
| 3 | >37.5 |
| 4 | 37.5 |
| 5 | 37.5 |
| 6 | >25 |
| 7 | 37.5 |
| 8 | 37.5 |

Example V

Aqueous dispersions were prepared by admixing one of the hereinafter set forth compounds, dissolved in a suitable inert solvent, with a predetermined quantity of water and a predetermined amount of a surfactant to give aqueous dispersions containing varying predetermined amounts of one of the compounds as the sole toxicant. Separate cotton plants were infested with 20 two-spotted spider mites and the plants sprayed with one of the dispersions to run off. In a like manner, 20 two-spotted spider mites were placed on control plants and the plants sprayed to run off with a solution containing only water and surfactant. The plants were maintained under conditions conducive to the growth of the plants and mites. After a period of five days, the plants were examined to determine the minimum concentration in parts of the active compound per million parts of the ultimate dispersion necessary to give at least 95 percent kill and control of the two-spotted spider mites. The results of this examination are set forth below in Table III.

TABLE III

| Number of active Compound | Minimum Concentration in ppm of active compound in dispersion to give $LC_{95}$ for foliar control of two-spotted spider mite |
|---|---|
| 1 | 400 |
| 2 | 400 |
| 3 | >400 |
| 4 | >400 |
| 5 | >400 |
| 6 | >400 |
| 7 | 400 |
| 8 | 400 |

Example VI

Aqueous dispersions were prepared by admixing one of the hereinafter set forth compounds, dissolved in a suitable inert solvent, with a predetermined quantity of water and a predetermined amount of a surfactant to give aqueous dispersions containing varying predetermined amounts of one of the compounds as the sole toxicant.

Separate cotton plants were infested with 20 two-spotted spider mites and a predetermined volume of the test dispersion was injected into the root zone of the plants to determine systemic insecticidal effects. In a like manner, 20 two-spotted spider mites were placed on control plants and a solution containing only water and surfactant was injected into the root zone. The plants were maintained under conditions conducive to the growth of the plants and mites. After a period of five days, the plants were examined to determine the minimum concentration in parts of the active compound per million parts of the ultimate dispersion necessary to give at least 95 percent kill and control of the two-spotted spider mites. The results of this examination are set forth below in Table IV.

TABLE IV

| Number of active Compound | Minimum Concentration in ppm of active compound in dispersion to give $LC_{95}$ for systemic control of two-spotted spider mite |
|---|---|
| 1 | 400 |
| 2 | 400 |
| 3 | >400 |
| 4 | >400 |
| 5 | 400 |
| 6 | >400 |
| 7 | 400 |
| 8 | 400 |

Example VII

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were dipped into one of the dispersions and permitted to dry.

A plastic cylinder was placed around each of the plants and 10 adult Aster leafhoppers were placed in the cylinder and the cylinder capped. In a like manner, 10 adult Aster leafhoppers were placed on control plants which had been dipped in a solution containing only water and surfactant. The plants were maintained under conditions conducive to the growth of the plants and leafhoppers. After a period of three days, the cylinder and plants were examined to determine the minimum concentration in parts of the active compound per million parts of the ultimate dispersion necessary to give at least 95 percent kill and control of the Aster leafhopper. The results of this examination are set forth below in Table V.

TABLE V

| Number of active Compound | Minimum Concentration in ppm of active compound in dispersion to give $LD_{95}$ for foliar control of Aster leafhoppers |
|---|---|
| 1 | 400 |
| 2 | 25 |
| 3 | 100 |
| 4 | >400 |
| 5 | 25 |
| 6 | 400 |
| 7 | 25 |
| 8 | 25 |

Example VIII

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were treated by adding a predetermined amount of one of the test dispersions to the root of the plant to determine systemic activity.

A plastic cylinder was placed around each of the plants and 10 adult Aster leafhoppers were placed in the cylinder and the cylinder capped. In a like manner, 10 adult Aster leafhoppers were placed on control plants which were injected at the root zone with a solution containing only water and surfactant. The plants were maintained under conditions conducive to the growth of the plants and leafhoppers. After a period of three days, the cylinder and plants were examined to determine the minimum concentration in parts of the active compound per million parts of the ultimate dispersion necessary to give at least 95 percent kill and control of the Aster leafhopper. The results of this examination are set forth below in Table VI.

TABLE VI

| Number of active Compound | Minimum Concentration in ppm of active compound in dispersion to give $LD_{95}$ for systemic control of Aster leafhoppers |
|---|---|
| 1 | 400 |
| 2 | 25 |
| 3 | >400 |
| 4 | >400 |
| 5 | 6.25 |
| 6 | 400 |
| 7 | 6.25 |
| 8 | 100 |

When applied at a dosage level as hereinabove set forth, each of the compounds of the present invention, the utility of which is not specifically exemplified hereinabove, has the ability to kill, inhibit or otherwise control one or more of the above said or other fungal or insect pests.

The substituted carbamimidothioic acid esters corresponding to the formula

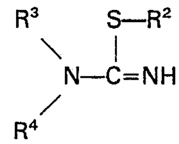

wherein $R^2$, $R^3$ and $R^4$ are as hereinbefore defined are for the most part known compounds and can be prepared by the reaction of an appropriate carbothioamide corresponding to the formula

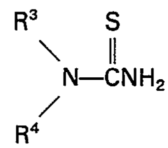

with the appropriate alkyl halide or alkylthioalkylhalide followed by treatment of the corresponding S-alkyl (or S-alkyl-S-alkyl)-N,N-substituted isothiourea thus formed with a base to obtain the desired carbamimidothioic acid ester.

In carrying out this reaction, the alkylhalide reactant is slowly added to a mixture of the carbothioamide reactant and a solvent such as methanol, ethanol or toluene. The mixture is then heated under reflux until the reaction is complete (from 1 to 4 hours or more). The reaction mixture is heated under reduced pressure to remove most of the solvent and the product is recovered by filtration.

The product which is in the form of the hydrogen halide salt can be treated directly with a base such as, a dilute aqueous sodium or potassium hydroxide solution or if desired, the product can be separated and purified by recrystallization from one of the solvents listed above and then treated with the base to obtain the product as the free base.

The substituted carbothioamides corresponding to the formula

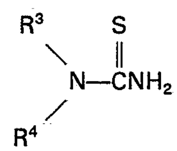

wherein $R^3$ and $R^4$ are as hereinbefore defined are for the most part known compounds and can be prepared in a two-step process. In the first step, substantially equimolar amounts of tertiary butyl isothio cyanate and an appropriate amine are reacted together in the presence of a solvent. The thus formed tertiary butyl thiourea is then treated with concentrated hydrochloric acid to remove the tertiary butyl group leaving the desired compound.

In carrying out this reaction, the tertiary butyl isothiocyanate is very slowly added to a stirred solution of the amine reactant in a solvent such as hexane, benzene or toleuene which is at a temperature of from $-10°$ to 20°C. The stirring mixture is allowed to warm up to room temperature ($\frac{1}{2}$ to 2 hours) and the product precipitates out and is recovered by filtration. The product can be purified if desired by recrystallization from a solvent such as ethanol, hexane, benzene or toluene.

The thiourea product, prepared as above, is admixed with from 2 to 4 moles of concentrated hydrochloric acid and the mixture heated to a temperature of from 50° to 95°C. The heating is conducted until all of the thiourea reactant is dissolved. The tertiary butyl chloride is then distilled off. The solution is cooled to ~20°C and made basic by the addition of aqueous sodium hydroxide. The desired product is then recovered by filtration. The product can be purified, if desired, by water washing and/or recrystallization of from a solvent such as ethanol.

The N'-(disubstitutedphosphinyl)-N,N-substituted carbamimidothioic acid esters which are employed as starting materials can be prepared by a method wherein substantially equimolar amounts of an appropriate substituted carbamimidothioic acid ester and a thiophosphoryl halide reacted together in the presence of a solvent and a HCl acceptor.

The reaction is conducted in a manner substantially the same as the reaction of Method A employing temperatures in the range of minus (−) 10° to 50°C. The solvents, the HCl acceptors and the method of recovery are the same as set forth in Method A.

**Claims for the Contracting States: BE CH DE FR IT LI LU NL SE**

1. A compound corresponding to the formula

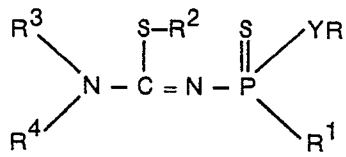

wherein

R is an alkyl group containing 1 to 4 carbon atoms;

$R^1$ is an alkyl group containing 1 to 4 carbon atoms or an alkoxy group containing 1 to 4 carbon atoms;

$R^2$ is an alkyl group containing 1 to 4 carbon atoms;

$R^3$ is an alkyl group containing 1 to 4 carbon atoms, a phenyl, substituted phenyl, benzyl or substituted benzyl group;

$R^4$ is an alkyl group containing 1 to 4 carbon atoms, a benzyl or substituted benzyl group; or

$R^3$ and $R^4$ when taken together represent an alkylene group containing 4 to 6 carbon atoms which group can be straight or branched chain or a group of the formula

$$-(CH_2CH_2)_2-O$$

and

Y is oxygen or sulphur, with the proviso that when $R^1$ is alkoxy then Y is sulphur.

2. A compound as claimed in claim 1 in which $R^2$, $R^3$ and $R^4$ are each independently an alkyl group.

3. Ethyl N'-(methoxy)methylthio)phosphinothioyl)-N,N-dimethylcarbamimidothiate.

4. Methyl N'-(methoxy(methylthio)phosphinothioyl)-N,N-dimethylcarbamimidothioate.

5. An insecticide composition comprising an inert carrier in admixture with an insecticidally effective amount of at least one active compound as claimed in any one of the preceding claims.

6. A method for the kill and control of insects which comprises contacting the insects or their habitat with a composition as claimed in claim 5.

7. A process for the preparation of a compound of the formula

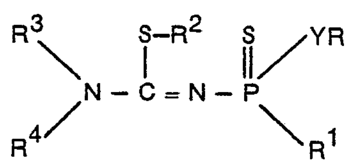

wherein R, $R^1$, $R^2$, $R^3$, $R^4$ and Y are as defined in claim 1, which process comprises reacting together substantially equimolar amounts of an appropriate substituted carbamimidothioic acid ester of the formula

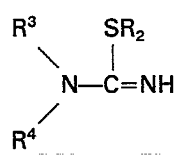

and an appropriate phosphorous chloride of the formula

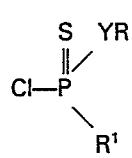

in the presence of a solvent and an HCl acceptor.

8. A process for the preparation of a compound of the formula

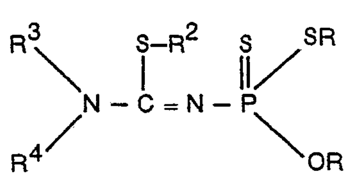

wherein R, $R^2$, $R^3$ and $R^4$ are as defined in claim 1, which process comprises reacting substantially equimolar amounts of an appropriate N'(chloromethylthiophosphinyl)-N,N-substituted carbamamidothioic acid ester of the formula

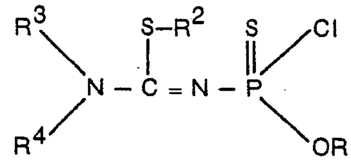

and a compound of the formula

HSR

in the presence of a solvent and a HCl acceptor.

**Claims for the Contracting State: AT**

1. A process for the preparation of a compound of the formula

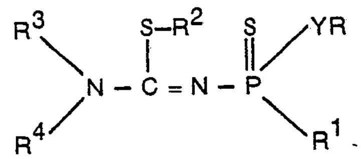

wherein

R is an alkyl group containing 1 to 4 carbon atoms;

$R^1$ is an alkyl group containing 1 to 4 carbon atoms or an alkoxy group containing 1 to 4 carbon atoms;

$R^2$ is an alkyl group containing 1 to 4 carbon atoms;

$R^3$ is an alkyl group containing 1 to 4 carbon atoms, a phenyl, substituted phenyl, benzyl or substituted benzyl group;

$R^4$ is an alkyl group containing 1 to 4 carbon atoms, a benzyl or substituted benzyl group; or

$R^3$ and $R^4$ when taken together represent an alkylene group containing 4 to 6 carbon atoms which group can be straight or branched chain or a group of the formula

$$-(CH_2CH_2)_2-O$$

and

Y is oxygen or sulphur, with the proviso that when $R^1$ is alkoxy then Y is sulphur which process comprises reacting together substantially equimolar amounts of an appropriate substituted carbamimidothioic acid ester of the formula

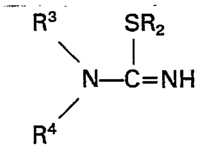

and an appropriate phosphorus chloride of the formula

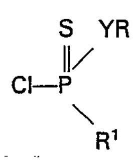

in the presence of a solvent and an HCl acceptor.

2. A process for the preparation of a compound of the formula

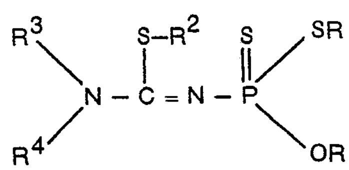

wherein R, $R^2$, $R^3$ and $R^4$ are as defined in claim 1, which process comprises reacting substantially equimolar amounts of an appropriate N'(chloromethoxyphosphinyl)-N,N-substituted carbamimidothioic acid ester of the formula

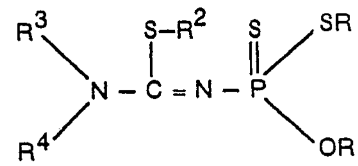

and a compound of the formula

HSR

in the presence of a solvent and a HCl acceptor.

3. An insecticidal composition comprising an inert carrier in admixture with an insecticidally effective amount of at least one active compound prepared by a process as claimed in claim 1 or claim 2.

4. A method for the kill and control of insects which comprises contacting the insects or their habitat with a composition as claimed in claim 3.

**Patentansprüche für die Vertragsstaaten: BE CH DE FR IT LI LU NL SE**

1. Verbindung der Formel

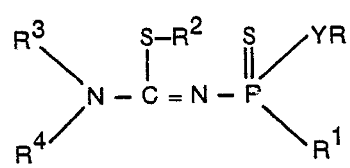

worin

R eine Alkylgruppe mit 1 bis 4 Kohlenstoffatomen ist;

$R^1$ eine Alkylgruppe mit 1 bis 4 Kohlenstoffatomen oder eine Alkoxygruppe mit 1 bis 4 Kohlenstoffatomen ist;

$R^2$ eine Alkylgruppe mit 1 bis 4 Kohlenstoffatomen ist;

$R^3$ eine Alkylgruppe mit 1 bis 4 Kohlenstoffatomen, eine Phenyl-, substituierte Phenyl-, Benzyl- oder substituierte Benzylgruppe ist;

$R^4$ eine Alkylgruppe mit 1 bis 4 Kohlenstoffatomen, eine Benzyl- oder substituierte Benzylgruppe ist; oder

$R^3$ und $R^4$ zusammen eine geradkettige oder verzweigte Alkylengruppe mit 4 bis 6 Kohlenstoffatomen bedeuten, oder eine Gruppe der Formel

$$-(CH_2CH_2)_2-O$$

und Y Sauerstoff oder Schwefel ist, mit der Maßgabe, daß, wenn $R^1$ Alkoxy ist, dann Y Schwefel ist.

2. Verbindung nach Anspruch 1, dadurch gekennzeichnet, daß $R^2$, $R^3$ und $R^4$ unabhängig voneinander eine Alkylgruppe sind.

3. Ethyl-N'-(methoxy(methylthio)phosphinothioyl)-N,N-dimethylcarbamimidothioat.

4. Methyl-N'-(methoxy(methylthio)phosphinothioyl)-N,N-dimethylcarbamimidothioat.

5. Insektizide Zusammensetzung, enthaltend einen inerten Träger in Mischung mit einer insektizid wirksamen Menge von mindestens einer in einem der vorhergehenden Ansprüche beanspruchten aktiven Verbindung.

6. Verfahren zur Abtötung und Kontrolle von Insekten, dadurch gekennzeichnet, daß man die Insekten oder ihr Habitat mit einer Zusammensetzung nach Anspruch 5 in Kontakt bringt.

7. Verfahren zur Herstellung einer Verbindung der Formel

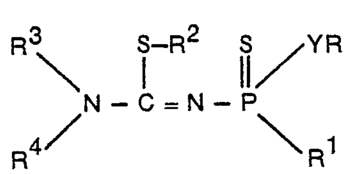

worin R, $R^1$, $R^2$, $R^3$, $R^4$ und Y die in Anspruch 1 angegebene Bedeutung besitzen, dadurch gekennzeichnet,

daß man im wesentlichen äquimolare Mengen eines geeigneten substituierten carbamimidothioischen Säureesters der Formel

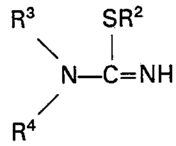

und ein geeignetes Phosphorchlorid der Formel

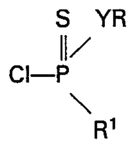

in Gegenward eines Lösungsmittels und eines HCl-Akzeptors umsetzt.

8. Verfahren zur Herstellung einer Verbindung der Formel

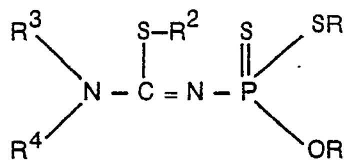

worin R, $R^2$, $R^3$ und $R^4$ die in Anspruch 1 angegebene Bedeutung besitzen, dadurch gekennzeichnet, daß man im wesentlichen äquimolare Mengen eines geeigneten N'-(Chlormethylthiophosphinyl)-N,N-substituierten carbamimidothioischen Säureesters der Formel

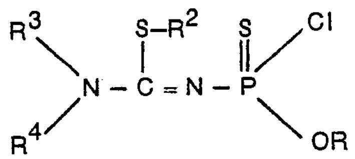

und eine Verbindung der Formel

HSR

in Gegenwart eines Lösungsmittels und eines HCl-Akzeptors umsetzt.

**Patentansprüche für den Vertragsstaat: AT**

1. Verfahren zur Herstellung einer Verbindung der Formel

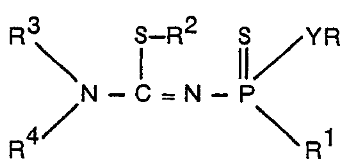

worin

R eine Alkylgruppe mit 1 bis 4 Kohlenstoffatomen ist;

$R^1$ eine Alkylgruppe mit 1 bis 4 Kohlenstoffatomen oder eine Alkoxygruppe mit 1 bis 4 Kohlenstoffatomen ist;

$R^2$ eine Alkylgruppe mit 1 bis 4 Kohlenstoffatomen ist;

$R^3$ eine Alkylgruppe mit 1 bis 4 Kohlenstoffatomen, eine Phenyl-, substituierte Phenyl-, Benzyl- oder substituierte Benzylgruppe ist;

$R^4$ eine Alkylgruppe mit 1 bis 4 Kohlenstoffatomen, eine Benzyl- oder substituierte Benzylgruppe ist; oder

$R^3$ und $R^4$ zusammen eine geradkettige oder verzweigte Alkylengruppe mit 4 bis 6 Kohlenstoffatomen darstellt, oder eine Gruppe der Formel

$$-(CH_2CH_2)_2-O$$

und Y Sauerstoff oder Schwefel ist, mit der Maßgabe, daß, wenn $R^1$ Alkoxy ist, dann Y Schwefel ist, dadurch gekennzeichnet, daß man im wesentlichen äquimolare Mengen eines geeigneten substituierten carbamidothioischen Säureesters der Formel

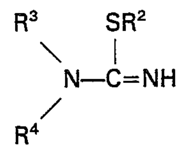

und eines geeigneten Phosphorchlorids der Formel

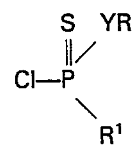

in Gegenwart eines Lösungsmittels und eines HCl-Akzeptors umsetzt.

2. Verfahren zur Herstellung einer Verbindung der Formel

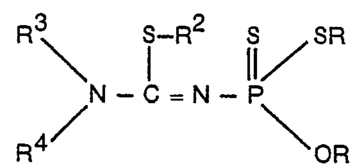

worin R, $R^2$, $R^3$ und $R^4$ die im Anspruch 1 angegebene Bedeutung besitzen, dadurch gekennzeichnet, daß man im wesentlichen äquimolare Mengen eines geeigneten N'-(Chlormethoxyphosphinyl)-N,N-substituierten carbamimidothioischen Säureesters der Formel

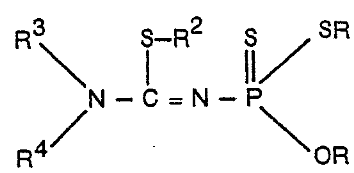

und eine Verbindung der Formel

HSR

in Gegenwart eines Lösungsmittels und eines HCl-Akzeptors umsetzt.

3. Insektizide Zusammensetzung enthaltend einen inerten Träger in Mischung mit einer insektizid wirksamen Menge von mindestens einer aktiven Verbindung, hergestellt durch ein Verfahren nach Anspruch 1 oder Anspruch 2.

4. Verfahren zur Abtötung und Kontrolle von Insekten, dadurch gekennzeichnet, daß man die Insekten oder ihr Habitat mit einer Zusammensetzung nach Anspruch 3 in Kontakt bringt.

**Revendications pour les Etats contractants: BE CH DE FR IT LI LU NL SE**

1. Composé correspondant à la formule

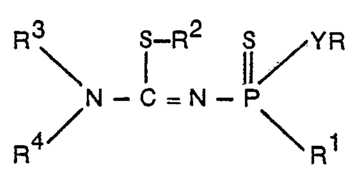

dans laquelle R est un groupe alkyle contenant 1 à 4 atomes de carbone; $R^1$ est un groupe alkyle contenant

1 à 4 atomes de carbone ou un groupe alcoxy contenant 1 à 4 atomes de carbone; $R^2$ est un groupe alkyle contenant 1 à 4 atomes de carbone; $R^3$ est un groupe alkyle contenant 1 à 4 atomes de carbone, un groupe phényle, phényle substitué, benzyle ou benzyle substitué; $R^4$ est un groupe alkyle contenant 1 à 4 atomes de carbone, un groupe benzyle ou benzyle substitué; ou $R^3$ et $R^4$ conjointment représentent un groupe alkylène contenant 4 à 6 atomes de carbone, ce groupe pouvant être à chaîne linéaire ou ramifiée, ou un groupe de formule

$$-(CH_2CH_2)_2-O$$

et Y est l'oxygène ou le soufre, à condition que, lorsque $R^1$ est le groupe alcoxy, Y soit alors le soufre.

2. Composé selon la revendication 1, caractérisé en ce que $R^2$, $R^3$ et $R^4$ sont chacun indépendamment un groupe alkyle.

3. N'(méthoxy(méthylthio)phosphinothioyl)-N,N-diméthyl-imidothiocarbamate d'éthyle.

4. N'-(méthoxy(méthylthio)phosphinothioyl)-N,N-diméthyl-imidothiocarbamate de méthyle.

5. Composition insecticide comprenant un véhicule inerte en mélange avec une quantité efficace du point de vue insecticide d'au moins un composé actif selon l'une quelconque des revendications précécentes.

6. Méthode pour détruire et lutter contre les insects, caractérisée en ce qu'elle consiste à mettre en contact les insectes ou leur biotope avec une composition selon la revendication 5.

7. Procédé pour la préparation d'un composé de formule

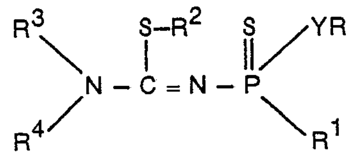

dans laquelle R, $R^1$, $R^2$, $R^3$, $R^4$ et Y sont tels que définis dans la revendication, caractérisé en ce qu'il comporte la réaction simultanée de quantités pratiquement équimolaires d'un ester de l'acide imidothiocarbamique substitué convenable de formule

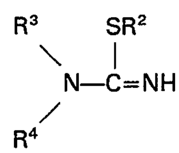

et d'un chlorure phosphoré convenable de formule

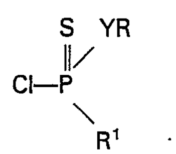

en présence d'un solvant et d'un accepteur d'HCl.

8. Procédé pour la préparation d'un composé de formule

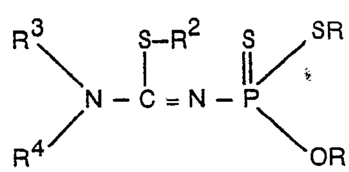

dans laquelle R, $R^2$, $R^3$ et $R^4$ sont tels que définis dans la revendication 1, caractérisé en ce qu'il comporte la réaction de quantités pratiquement équimolaires d'un ester de l'acide N'-(chlorométhylthiophosphinyl) imidothiocarbamique N, N substitué convenable de formule

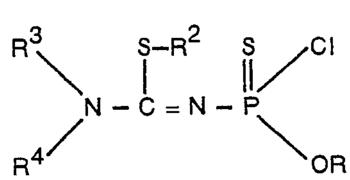

et d'un composé de formule

HSR

en présence d'un solvant et d'un accepteur d'HCl.

**Revendications pour l'Etat contractant: AT**

1. Procédé pour la préparation d'un composé de formule

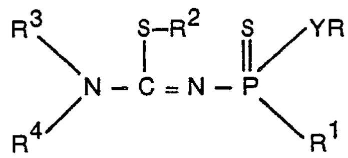

dans laquelle R est un groupe alkyle contenant 1 à 4 atomes de carbone; $R^1$ est un groupe alkyle contenant 1 à 4 atomes de carbone ou un groupe alcoxy contenant 1 à 4 atomes de carbone; $R^2$ est un groupe alkyle contenant 1 à 4 atomes de carbone; $R^3$ est un groupe alkyle contenant 1 à 4 atomes de carbone, un groupe phényle, phényle substitué, benzyle ou benzyle substitué; $R^4$ est un groupe alkyle contenant 1 à 4 atomes de carbone, un groupe benzyle ou benzyle substitué; ou $R^3$ et $R^4$ conjointement représentent un groupe alkylène contenant 4 à 6 atomes de carbone, ce groupe pouvant être à chaîne linéaire ou ramifiée, ou un groupe de formule

$$-[CH_2CH_2]_2-O$$

et Y est l'oxygène ou le soufre, à condition que lorsque $R^1$ est le groupe alcoxy, Y soit alors le soufre, caractérisé en ce qu'il comporte la réaction de quantités pratiquement équimolaires d'un ester de l'acide imidothiocarbamique substitué convenable de formule

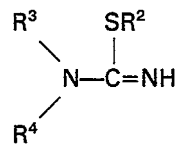

et d'un chlorure phosphoré convenable de formule

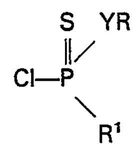

en présence d'un solvant et d'un accepteur d'HCl.

2. Procédé pour la préparation d'un composé de formule

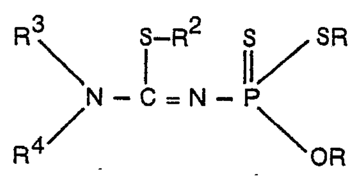

dans laquelle R, $R^2$, $R^3$ et $R^4$ sont tels que définis dans la revendication 1, caractérisé en ce qu'il comporte la réaction de quantités pratiquement équimolaires d'un ester de l'acide N'-(chlorométhoxyphosphinyl) imidothiocarbamique N,N-substitué convenable de formule.

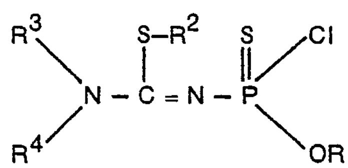

et d'un composé de formule

HSR

en présence d'un solvant et d'un accepteur d'HCl.

3. Composition insecticide comprenant un véhicule inerte en mélange avec une quantité efficace du point de vue insecticide d'au moins un composé actif préparé par un procédé selon la revendication 1 ou 2.

4. Méthode pour détruire et lutter contre des insectes caractérisée en ce qu'elle consiste à mettre en contact les insectes ou leur biotope avec une composition selon la revendication 3.